# EUROPÄISCHE PATENTSCHRIFT

(11) **EP 3 589 502 B1**
(45) Veröffentlichungstag und Bekanntmachung des Hinweises auf die Patenterteilung: **30.06.2021**
(21) Anmeldenummer: 18703536.5
(22) Anmeldetag: 30.01.2018
(51) Int. Cl.: B60C 11/03, B60C 11/12

(54) **FAHRZEUGLUFTREIFEN**
PNEUMATIC VEHICLE TYRE
PNEUMATIQUE POUR VÉHICULE

(30) Priorität: 28.02.2017 DE 102017203219
(43) Veröffentlichungstag der Anmeldung: 08.01.2020
(73) Patentinhaber: Continental Reifen Deutschland GmbH, 30165 Hannover (DE)
(72) Erfinder: SENG, Matthias, 30453 Hannover (DE); JACKSTADT, Michael, 30989 Gehrden (DE); DIENSTHUBER, Franz, 60528 Frankfurt (DE)
(74) Vertreter: Continental Corporation
(86) Internationale Anmeldenummer: PCT/EP2018/052213
(87) Internationale Veröffentlichungsnummer: WO 2018/158022

(56) Entgegenhaltungen:
- EP-A1- 2 602 127
- WO-A1-2015/091333
- DE-A1-102007 044 435

## Beschreibung

Die vorliegende Erfindung bezieht sich auf einen Fahrzeugluftreifen.

Die Erfindung geht aus von einem Fahrzeugluftreifen, der in eine Umlaufrichtung rotierbar ist. Der Fahrzeugluftreifen weist einen Laufstreifen mit durch Umfangsrillen oder Schrägrillen und durch Querrillen gebildeten und zusammenhängend ausgeführten Profilblöcken auf. Dabei erstrecken sich die Querrillen bis zu einem Übergangsbereich zweier Profilblöcke. Der Übergangsbereich ist erfindungsgemäß Bestandteil eines ersten Profilblockes mindestens zweier Profilblöcke.

Ferner weist jeder Profilblock zumindest drei, in Draufsicht gerade oder leicht gebogene, Einschnitte auf. Dabei erstreckt sich zumindest ein erster Einschnitt der zumindest drei Einschnitte im Wesentlichen parallel zu einer Längsachse mindestens eines Profilblocks.

Eine Draufsicht ist parallel zu einem Radius des Fahrzeugluftreifens auf den Laufstreifen gerichtet.

Der Fahrzeugluftreifen folgt einer Kreisform. Der Radius dieser Kreisform liegt rechtwinklig zu einer Rotationsachse des Fahrzeugluftreifens und rechtwinklig zu der Umlaufrichtung des Fahrzeugluftreifens. Eine radiale Erstreckung oder Ausdehnung bedeutet insbesondere parallel zu dem Radius des Fahrzeugluftreifens.

Die Umlaufrichtung des Fahrzeugluftreifens ist die Richtung, um die der Fahrzeugluftreifen während eines regulären Betriebs um die Rotationsachse rotiert.

Eine Erstreckung einer Umfangs- oder Schrägrille, einer Querrille oder eines Einschnittes bedeutet insbesondere die Ausdehnung der Rille oder des Einschnitts parallel zu dem Laufstreifen und insbesondere stets rechtwinklig zu dem Radius des Fahrzeugluftreifens.

Eine Längsachse eine Profilblocks ist eine Achse des Profilblocks, die parallel zu der größten räumlichen Ausdehnung des Profilblocks und parallel zu dem Laufstreifen liegt.

Aus dem Stand der Technik sind Reifen bekannt, die einen Laufstreifen, mit durch Umfangs- oder Schrägrillen und durch Querrillen gebildeten und zusammenhängend ausgeführten Profilblöcken, aufweisen.

Beispielsweise wird in der DE 10 2011 052 684 A1 ein Fahrzeugluftreifen offenbart, der auf seinem Laufstreifen durch Umfangsrillen ausgebildete Profilblöcke aufweist.

Bei den aus dem Stand der Technik bekannten Luftreifen, beispielsweise solchen Luftreifen, die in der WO 2015 052 122 A1 oder der WO 2015 091 333 A1 offenbart werden, sind regelmäßig Profilblöcke ausgebildet, die in Umlaufrichtung spitz zusammenlaufende Profilblockecken aufweisen. Spitz zusammenlaufend in Umlaufrichtung bedeutet, dass eine Profilblockecke einen spitzen Winkel, also einen Winkel kleiner 90°, in Umlaufrichtung ausbildet.

Diese spitz zusammenlaufenden Profilblockecken könnten, beispielsweise auf einer trockenen Fahrbahn, keine optimal hohen Kräfte auf die Fahrbahn übertragen. Darüber hinaus könnten diese spitz zusammenlaufenden Profilblockecken zu einer Geräuschbildung des Luftreifens bei einem Abrollen und zu einer Entstehung von Vibrationen, die von dem Luftreifen während seines Abrollens ausgehen, führen. Ferner könnten sich die spitz zusammenlaufendenden Profilblockecken unter Krafteinwirkung bei einem Abrollen des Fahrzeugluftreifens verbiegen. Durch dieses Verbiegen oder Kippen könnte es zu einem unregelmäßigen Abrieb der Profilblöcke kommen. Der unregelmäßige Abrieb könnte zu einer Verschlechterung der Kraftübertragung, also zu einer Verringerung der übertragenen Kraft oder zu einer ungleichmäßigen Kraftübertragung, durch den Fahrzeugluftreifen auf die Fahrbahn führen.

Die DE 10 2007 044435 A1 offenbart einen Fahrzeugluftreifen mit den Merkmalen des Oberbegriffs des Anspruchs 1.

Der Erfindung liegt daher die Aufgabe zugrunde, einen verbesserten Fahrzeugluftreifen bereitzustellen.

Gelöst wird die gestellte Aufgabe durch die Merkmale des unabhängigen Anspruchs 1.

Durch den erfindungsgemäßen Umstand, wonach sich mindestens ein zweiter und mindestens ein dritter Einschnitt der zumindest drei Einschnitte in einem Winkel von jeweils 70 ° bis 90° zu der Umlaufrichtung oder einer Parallele der Umlaufrichtung des Fahrzeugluftreifens erstrecken, wird insbesondere durch diese beiden Einschnitte eine höhere Kraftübertragung auf eine Fahrbahn, insbesondere auf eine schneebedeckte Fahrbahn, ermöglicht.

Insgesamt wird durch die Erhöhung der Kraftübertragung und durch die Ermöglichung eines gleichmäßigen Abriebs ein verbesserter Fahrzeugluftreifen bereitgestellt.

Bei dem erfindungsgemäßen Luftreifen kann es sich beispielsweise um einen PKW-Luftreifen oder einen LKW-Luftreifen oder auch um einen Fahrradluftreifen handeln. Es kann sich bei dem Fahrzeugluftreifen beispielsweise um einen Sommerreifen, um einen Winterreifen oder um einen Alljahresreifen handeln. Vorzugsweise handelt es sich bei dem Fahrzeugluftreifen um einen Alljahresreifen.

Durch den erfindungsgemäßen Umstand, wonach der erste Einschnitt und der zweite Einschnitt einen einzigen, zusammenhängenden abgewinkelten Einschnitt ausbilden, wird die Kraftübertragung des Profilblocks durch diesen zusammenhängenden Einschnitt weiter erhöht.

Weitere vorteilhafte Ausgestaltungsformen der vorliegenden Erfindung sind Gegenstand der Unteransprüche.

Gemäß einer vorzugsweisen Ausführungsform der Erfindung bilden der erste und der zweite Einschnitt einen Winkel von 120° bis 150°, vorzugsweise von 130° bis 140° und insbesondere von 135°.

Durch den erfindungsgemäßen Umstand, wonach der erste und der zweite Einschnitt einen Winkel von 120° bis 150°, vorzugsweise von 130° bis 140° und insbesondere von 135° bilden, ist der Luftreifen gleichermaßen für den Einsatz bei einer nassen Fahrbahn als auch für den Einsatz bei einer schneebedeckten Fahrbahn geeignet.

Gemäß einer vorzugsweisen Ausführungsform der Erfindung weisen der erste Einschnitt und der zweite Einschnitt rechtwinklig zu ihrer Erstreckung eine Breite von 0,4 mm bis 2 mm und vorzugsweise von 0,5 mm auf. Dabei handelt es sich bei der Breite insbesondere um eine minimale Breite.

Die Breite des Einschnittes entspricht der Ausdehnung des Einschnittes rechtwinklig zu seiner Erstreckung. Diese Breite entspricht somit auch einer Ausdehnung des Einschnittes parallel zu dem Laufstreifen und insbesondere rechtwinklig zu dem Radius des Fahrzeugluftreifens. Die Breite kann insbesondere der Abstand entlang des Laufstreifens sein.

Gemäß einer vorzugsweisen Ausführungsform der Erfindung bildet die Längsachse des mindestens einen Profilblocks mit der Umlaufrichtung einen Winkel von 30° bis 60°, vorzugsweise von 40° bis 50° und insbesondere von 45°.

Durch den erfindungsgemäßen Umstand, wonach die Längsachse des mindestens einen Profilblocks mit der Umlaufrichtung einen Winkel von 30° bis 60°, vorzugsweise von 40° bis 50° und insbesondere von 45° bildet, ist der Luftreifen gleichermaßen für den Einsatz bei einer nassen Fahrbahn als auch für den Einsatz bei einer schneebedeckten Fahrbahn geeignet.

Gemäß einer vorzugsweisen Ausführungsform der Erfindung ist der Übergangsbereich räumlich jeweils derart zwischen mindestens zwei Profilblöcken angeordnet, dass er in Draufsicht der Form eines Dreiecks folgt. Dabei wird eine erste Seite des Dreiecks durch den dritten Einschnitt der drei Einschnitte eines ersten der mindestens zwei Profilblöcke gebildet. Eine dieser ersten Seite des Dreiecks gegenüberliegende Spitze des Dreiecks, weist in Richtung der Umlaufrichtung. Dies bedeutet insbesondere, dass die Spitze beispielsweise in eine Richtung weist, die parallel zu der Umlaufrichtung liegt.

Der Übergangsbereich folgt insbesondere einer allgemein-zylindrischen Form mit dreieckiger Grundfläche. Dabei erstreckt sich dieser allgemeine Zylinder rechtwinklig von dem Laufstreifen wegweisend und insbesondere radial.

Gemäß einer vorzugsweisen Ausführungsform der Erfindung ist der Übergangsbereich mit dem zweiten Profilblock der mindestens zwei Profilblöcke stoffschlüssig verbunden.

Durch den erfindungsgemäßen Umstand, wonach der Übergangsbereich mit dem zweiten Profilblock der mindestens zwei Profilblöcke stoffschlüssig verbunden ist, wird ein Kippen der Profilblöcke oder von Bestandteilen der Profilblöcke weitestgehend vermieden. Dies führt zu einem gleichmäßigeren Abrieb des Laufstreifens. Ferner wird der zweite Profilblock durch den Übergangsbereich mechanisch versteift, wodurch insbesondere die Kraftübertragung im Fall einer trockenen Fahrbahn verbessert wird.

Gemäß einer vorzugsweisen Ausführungsform der Erfindung ist der dritte Einschnitt, durch den die erste Seite des Dreiecks gebildet wird, rechtwinklig zu seiner Erstreckung breiter, als der erste und der zweite Einschnitt der drei Einschnitte des mindestens einen ersten Profilblocks. Insbesondere weist der dritte Einschnitt rechtwinklig zu seiner Erstreckung eine Breite von 0,4 mm bis 2 mm, vorzugsweise von 1,5 mm bis 2 mm und insbesondere von mindestens 1,5 mm bis 2 mm auf.

Gemäß einer vorzugsweisen Ausführungsform der Erfindung weisen die Querrillen rechtwinklig zu ihrer Erstreckung eine Breite von 2 mm bis 10 mm und vorzugsweise von 3 mm bis 7 mm und insbesondere von 3 mm bis 4 mm und vorzugsweise von mindestens 3 mm bis 4 mm auf.

Die Breite der Querrillen entspricht der Ausdehnung der Querrillen rechtwinklig zu ihrer Erstreckung. Diese Breite entspricht somit auch einer Ausdehnung eine Querrille parallel zu dem Laufstreifen und insbesondere rechtwinklig zu dem Radius des Fahrzeugluftreifens.

Durch den erfindungsgemäßen Umstand, wonach die Querrillen rechtwinklig zu ihrer Erstreckung eine Breite von 2 mm bis 10 mm und vorzugsweise von 3 mm bis 7 mm und insbesondere von 3 mm bis 4 mm und vorzugsweise von mindestens 3 mm bis 4 mm aufweisen, ist der Luftreifen insbesondere für den Einsatz bei einer nassen Fahrbahn geeignet, da die Wahrscheinlichkeit eines Eintretens eines Aquaplanings verringert wird. Je nach Anzahl von Profilblöcken pro Flächeneinheit des Laufstreifens kann ein Profilnegativanteil von ungefähr 30% erreicht werden. Dieser Profilnegativanteil stellt die Eignung des Luftreifens bei einer nassen Fahrbahn sicher. Der Profilnegativanteil entspricht einem Anteil des Luftreifenmaterials, der aus dem Laufstreifen entfernt worden ist, um das Profil des Luftreifens auszubilden.

Gemäß einer vorzugsweisen Ausführungsform der Erfindung ist ein Wert einer maximalen radialen Tiefe des ersten Einschnitts und/oder des zweiten Einschnitts 1,2 mm kleiner als ein Wert einer maximalen radialen Tiefe der Querrillen.

Die radiale Tiefe einer Querrille entspricht der Ausdehnung der Querrille rechtwinklig zu ihrer Erstreckung. Diese radiale Tiefe entspricht somit auch einer Ausdehnung der Querrille rechtwinklig zu dem Laufstreifen und insbesondere parallel zu dem Radius des Fahrzeugluftreifens.

Durch den erfindungsgemäßen Umstand, wonach ein Wert einer maximalen radialen Tiefe des ersten Einschnitts und/oder des zweiten Einschnitts 1,2 mm kleiner ist als ein Wert einer maximalen radialen Tiefe der Querrillen, wird eine Kraftübertragung insbesondere bei einer schneebedeckten Fahrbahn auch nach Einsetzen des Abriebs des Luftreifens weitestgehend sichergestellt.

Gemäß einer vorzugsweisen Ausführungsform der Erfindung entspricht eine mittlere radiale Tiefe des dritten Einschnitts der mindestens drei Einschnitte einem Wert, der von dem Wert der mittleren radialen Tiefe des ersten Einschnitts und des zweiten Einschnitts bis zu dem Wert der radialen Tiefe der Querrillen reicht.

Die radiale Tiefe eines Einschnitts entspricht der Ausdehnung des Einschnitts rechtwinklig zu seiner Erstreckung. Diese radiale Tiefe entspricht somit auch einer Ausdehnung eines Einschnitts rechtwinklig zu dem Laufstreifen und insbesondere parallel zu dem Radius des Fahrzeugluftreifens.

Gemäß einer vorzugsweisen Ausführungsform der Erfindung folgt der erste Einschnitt einer Krümmung bezüglich der Längsachse des mindestens einen Profilblocks, wobei die Krümmung einem Kreisbogen eines Kreises mit einem Radius von 250 mm bis 400 mm folgt.

Durch den erfindungsgemäßen Umstand, wonach der erste Einschnitt eine Krümmung bezüglich der Längsachse des mindestens einen Profilblocks aufweist, wobei die Krümmung einem Kreisbogen eines Kreises mit einem Radius von 250 mm bis 400 mm folgt, genügt der Luftreifen den Einsatzbedingungen sowohl bei trockener Fahrbahn als auch bei nasser oder schneebedeckter Fahrbahn. Hintergrund ist, dass eine Kante des mindestens einen Profilblockes und der erste Einschnitt in dem Profilblock im Wesentlichen parallel zueinander verlaufen. Die Kante stellt eine Begrenzung einer Querrille dar, die zu der Mitte des Laufstreifens hin einen flacheren Winkel zu der Rotationsachse ausbildet, als in einem Bereich des Laufstreifens der von seiner Mitte weiter entfernt ist. Somit ist der Bereich der Mitte des Laufstreifens für den Einsatz bei einer nassen Fahrbahn geeignet und der Bereich des Laufstreifens, der von seiner Mitte entfernt ist, ist für den Einsatz bei einer schneebedeckten Fahrbahn geeignet. Somit ist der Laufstreifen insbesondere zugleich für den Einsatz bei einer nassen Fahrbahn, als auch für den Einsatz bei einer schneebedeckten Fahrbahn und für den Einsatz bei einer trockenen Fahrbahn geeignet.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines Fahrzeugluftreifens;
- Fig. 2: eine schematische Darstellung einer Draufsicht auf einen Bereich eines Laufstreifens eines Fahrzeugluftreifens;
- Fig. 3: eine schematische Darstellung einer Draufsicht auf einen Bereich eines Laufstreifens eines Fahrzeugluftreifens gemäß einer Ausführungsform;
- Fig. 4: eine schematische Darstellung mindestens eines Profilblocks gemäß einer Draufsicht auf einen Bereich eines Laufstreifens eines Fahrzeugluftreifens gemäß einer Ausführungsform;
- Fig. 5: eine schematische Darstellung mindestens eines Profilblocks gemäß einer Draufsicht auf einen Bereich eines Laufstreifens eines Fahrzeugluftreifens gemäß einer weiteren Ausführungsform;
- Fig. 6: eine schematische Darstellung eines Bereichs eines Laufstreifens eines Fahrzeugluftreifens gemäß einer Ausführungsform in Schrägsicht.

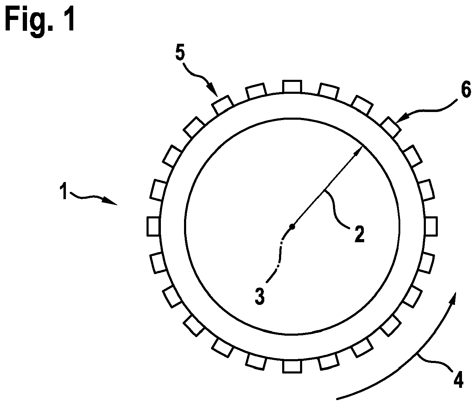

In der Figur 1 ist ein Fahrzeugluftreifen 1 schematisch dargestellt. Der Fahrzeugluftreifen 1 folgt der Form eines Kreises mit einem Radius 2. Dabei ist der Luftreifen 1 um eine Rotationsachse 3 in eine Umlaufrichtung 4 rotierbar. Der Fahrzeugluftreifen 1 weist radial außen einen Laufstreifen 5 auf. Radial außen bedeutet von der Rotationsachse 3 ausgehend von dem Fahrzeugluftreifen 1 weg weisend. Auf dem Laufstreifen 5 sind Profilblöcke 6 ausgebildet.

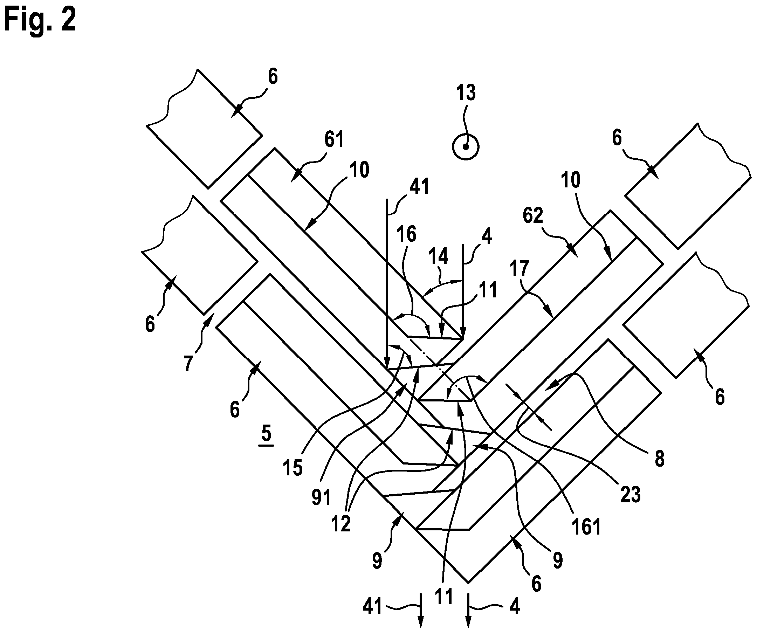

In der Figur 2 ist eine Draufsicht auf einen Bereich eines Laufstreifens 5 eines Fahrzeugluftreifens 1 schematisch dargestellt. Der Laufstreifen 5weist durch Umfangs- oder Schrägrillen 7 und durch Querrillen 8 gebildete und zusammenhängend ausgeführte Profilblöcke 6 auf. Dabei erstrecken sich die Querrillen 8 bis zu einem Übergangsbereich 9 zweier Profilblöcke 61 und 62. Der Übergangsbereich 91 ist erfindungsgemäß Bestandteil eines ersten Profilblockes 61 mindestens zweier Profilblöcke 61 und 62.

Ferner weist jeder Profilblock 6 zumindest drei, in Draufsicht gerade oder leicht gebogene Einschnitte 10, 11 und 12 auf. Richtung 13 verdeutlicht die Sichtrichtung der Draufsicht.

Dabei erstreckt sich zumindest ein erster Einschnitt 10 der zumindest drei Einschnitte 10, 11 und 12 im Wesentlichen parallel zu einer Längsachse mindestens eines Profilblocks 61.

Mindestens ein zweiter Einschnitt 11 und mindestens ein dritter Einschnitt 12 der zumindest drei Einschnitte 10, 11, 12 erstrecken sich in einem Winkel 14 und 15 von jeweils 70 ° bis 90° zu der Umlaufrichtung 4 beziehungsweise einer Parallele 41 der Umlaufrichtung 4 des Fahrzeugluftreifens 1.

Der erste Einschnitt 10 und der zweite Einschnitt 11 bilden einen einzigen, zusammenhängenden abgewinkelten Einschnitt aus, wobei sie insbesondere einen Winkel 16 von 120° bis 150°, vorzugsweise von 130° bis 140° und insbesondere von 135° bilden.

Ein gemeinsam ausgebildeter Einschnitt 17, der aus einem ersten und einem zweiten Einschnitt des Profilblocks 62 gebildet wird, ist zur Verdeutlichung schematisch dargestellt. Der Einschnitt 17 bildet einen Winkel 161 von 120° bis 150°, vorzugsweise von 130° bis 140° und insbesondere von 135° aus.

Die Querrillen 8 weisen beispielsweise rechtwinklig zu ihrer Erstreckung eine Breite 23 von 3 mm bis 4 mm auf.

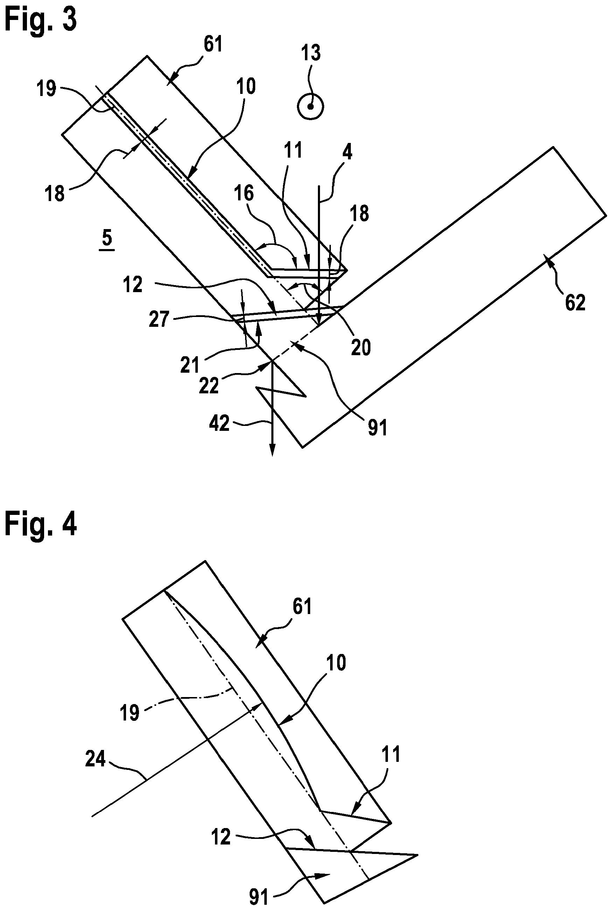

In der Figur 3 ist der Profilblock 61 gemäß einer Draufsicht auf einen Bereich eines Laufstreifens 5 eines Fahrzeugluftreifens 1 gemäß einer Ausführungsform schematisch dargestellt. Gemäß der Darstellung in der Figur 3 weisen der erste Einschnitt 10 und der zweite Einschnitt 11 rechtwinklig zu ihrer Erstreckung eine Breite 18 von 0,4 mm bis 2 mm und vorzugsweise von 0,5 mm auf.

Eine als Strich-Punkt-Linie dargestellte Längsachse 19 des mindestens einen Profilblocks 62 bildet mit der Umlaufrichtung 4 einen Winkel 20 von 30° bis 60°, vorzugsweise von 40° bis 50° und insbesondere von 45° aus.

Der Übergangsbereich 91 ist räumlich insbesondere derart zwischen mindestens zwei Profilblöcken 61 und 62 angeordnet, dass er in Draufsicht der Form eines Dreiecks folgt. Eine erste Seite 21 des Dreiecks wird durch den dritten Einschnitt 12 der drei Einschnitte 10, 11 und 12 des Profilblocks 61 gebildet. Eine dieser ersten Seite 21 des Dreiecks gegenüberliegende Spitze 22 des Dreiecks weist in Richtung der Umlaufrichtung 4. Insbesondere weist die Spitze 22 in eine Richtung 42 parallel zu der Umlaufrichtung 4.

Der dritte Einschnitt 12 weist eine Breite 27 auf.

In der Figur 4 ist der Profilblock 61 gemäß einer Draufsicht auf einen Bereich eines Laufstreifens 5 eines Fahrzeugluftreifens 1 gemäß einer weiteren Ausführungsform schematisch dargestellt. Gemäß der Darstellung in der Figur 4 weist der erste Einschnitt 10 eine Krümmung bezüglich der Längsachse 19 des mindestens einen Profilblocks 61 auf. Die Krümmung folgt beispielsweise einem Kreisbogen eines Kreises mit einem Radius 24 von 250 mm bis 400 mm.

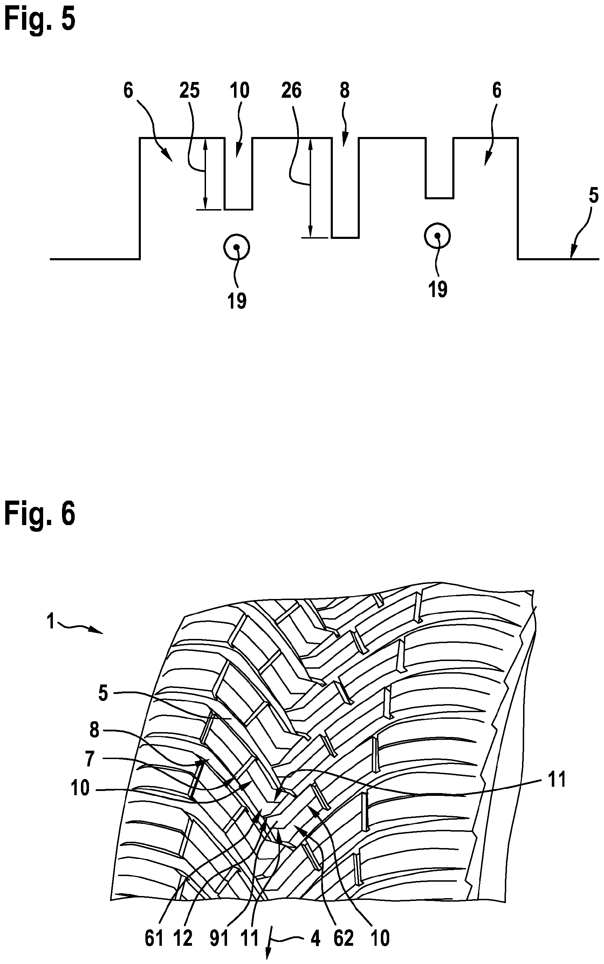

In der Figur 5 ist mindestens ein Profilblock 6 in einer Schnittansicht schematisch dargestellt. Die Sichtperspektive dieser Darstellung ist parallel zu der Längsachse 19 des mindestens einen Profilblockes 6. Gemäß der Darstellung in der Figur 5 ist ein Wert einer mittleren radialen Tiefe 25 des ersten Einschnitts 10 und/oder des zweiten Einschnitts 11 um 1,2 mm kleiner als ein Wert einer radialen Tiefe 26 der Querrillen 8.

Eine nicht dargestellte mittlere radiale Tiefe des dritten Einschnitts 12 entspricht insbesondere einem Wert, der von dem Wert der mittleren radialen Tiefe 25 des ersten Einschnitts 10 und des zweiten Einschnitts 11 bis zu dem Wert der radialen Tiefe 26 der Querrillen 8 reicht.

In der Figur 6 ist ein Bereich eines Laufstreifens 5 eines Fahrzeugluftreifens 1 in Schrägsicht gemäß einer Ausführungsform der Erfindung schematisch dargestellt.

### Bezugszeichenliste

### (Teil der Beschreibung)

- 1: Fahrzeugluftreifen
- 2: Radius des Fahrzeugluftreifens
- 3: Rotationsachse
- 4: Umlaufrichtung
- 41: Parallele der Umlaufrichtung
- 42: Parallele der Umlaufrichtung
- 5: Laufstreifen
- 6: Profilblock
- 61: Profilblock
- 62: Profilblock
- 7: Umfangs- oder Schrägrille
- 8: Querrille
- 9: Übergangsbereich
- 91: Übergangsbereich
- 10: Erster Einschnitt
- 11: Zweiter Einschnitt
- 12: Dritter Einschnitt
- 13: Richtung der Draufsicht
- 14: Winkel des zweiten Einschnitts zu der Umlaufrichtung
- 15: Winkel des dritten Einschnitts zu der Parallele der Umlaufrichtung
- 16: Winkel eines gemeinsam ausgebildeten Einschnitts
- 17: Gemeinsam ausgebildeter Einschnitt
- 18: Breite des ersten oder zweiten Einschnitts
- 19: Längsachse
- 20: Winkel der Längsachse zur Umlaufrichtung
- 21: Erste Seite eines Dreiecks
- 22: Spitze eines Dreiecks
- 23: Breite der Querrillen
- 24: Radius
- 25: Radiale Tiefe des ersten Einschnitts
- 26: Radiale Tiefe einer Querrille
- 27: Breite des dritten Einschnitts

## Patentansprüche

1. Fahrzeugluftreifen (1), der in eine Umlaufrichtung (4) rotierbar ist, mit einem Laufstreifen (5), mit durch Umfangs- oder Schrägrillen (7) und durch Querrillen (8) gebildeten und zusammenhängend ausgeführten Profilblöcken (6, 61, 62), derart, dass sich die Querrillen (8) bis zu einem Übergangsbereich (91) zweier Profilblöcke (61, 62) erstrecken, wobei der Übergangsbereich (91) Bestandteil eines ersten Profilblockes (61) der mindestens zwei Profilblöcke (61, 62) ist, und wobei jeder Profilblock (6, 61, 62) zumindest drei, in Draufsicht gerade oder leicht gebogene, Einschnitte (10, 11, 12) aufweist, wobei sich zumindest ein erster Einschnitt (10) der zumindest drei Einschnitte (10, 11, 12) im Wesentlichen parallel zu einer Längsachse (19) mindestens eines Profilblocks (61) erstreckt, wobei sich mindestens ein zweiter Einschnitt (11) und mindestens ein dritter Einschnitt (12) der zumindest drei Einschnitte (10, 11, 12) in einem Winkel (14, 15) von jeweils 70° bis 90° zu der Umlaufrichtung (4) oder eine Parallele (41) der Umlaufrichtung (4) des Fahrzeugluftreifens (1) erstrecken, **dadurch gekennzeichnet, dass** der erste Einschnitt (10) und der zweite Einschnitt (11) einen einzigen, zusammenhängenden abgewinkelten Einschnitt (17) ausbilden.

2. Fahrzeugluftreifen (1) nach dem vorhergehenden Anspruch, **dadurch gekennzeichnet, dass** der erste Einschnitt (10) und der zweite Einschnitt (11) einen Winkel (16) von 120° bis 150° und vorzugsweise von 130° bis 140° und insbesondere von 135° bilden.

3. Fahrzeugluftreifen (1) nach einem der vorhergehenden Ansprüche, **dadurch gekennzeichnet, dass** der erste Einschnitt (10) und der zweite Einschnitt (11) rechtwinklig zu ihrer Erstreckung eine Breite (18) von 0,4 mm bis 2 mm und vorzugsweise von 0,5 mm aufweisen.

4. Fahrzeugluftreifen (1) nach einem der vorhergehenden Ansprüche, **dadurch gekennzeichnet, dass** die Längsachse (19) des mindestens einen Profilblocks (61) mit der Umlaufrichtung (4) einen Winkel (20) von 30° bis 60°, vorzugsweise von 40° bis 50° und insbesondere von 45° bildet.

5. Fahrzeugluftreifen (1) nach einem der vorhergehenden Ansprüche, **dadurch gekennzeichnet, dass** der Übergangsbereich (91) räumlich jeweils derart zwischen mindestens zwei Profilblöcken (61, 62) angeordnet ist, und in Draufsicht der Form eines Dreiecks folgt, wobei eine erste Seite (21) des Dreiecks durch den dritten Einschnitt (12) der drei Einschnitte (10, 11, 12) eines ersten Profilblocks (61) der mindestens zwei Profilblöcke (61, 62) gebildet wird und eine dieser ersten Seite (21) des Dreiecks gegenüberliegende Spitze (22) des Dreiecks in Richtung (42) der Umlaufrichtung (4) weist.

6. Fahrzeugluftreifen (1) nach dem vorhergehenden Anspruch, **dadurch gekennzeichnet, dass** der Übergangsbereich (91) mit dem zweiten Profilblock (62) der mindestens zwei Profilblöcke (61, 62) stoffschlüssig verbunden ist.

7. Fahrzeugluftreifen (1) nach einem der Ansprüche 5 oder 6, **dadurch gekennzeichnet, dass** der dritte Einschnitt (12), durch den die erste Seite (21) des Dreiecks gebildet wird, rechtwinklig zu seiner Erstreckung breiter ist, als der erste Einschnitt (10) und der zweite Einschnitt (11) der drei Einschnitte (10, 11, 12) des mindestens einen ersten Profilblocks (61) und insbesondere rechtwinklig zu seiner Erstreckung ein Breite (27) von 0,4 mm bis 2 mm und vorzugsweise von 1,5 mm bis 2 mm aufweist.

8. Fahrzeugluftreifen (1) nach einem der vorhergehenden Ansprüche, **dadurch gekennzeichnet, dass** die Querrillen (8) rechtwinklig zu ihrer Erstreckung eine Breite (23) von 2 mm bis 10 mm und vorzugsweise von 3 mm bis 7 mm und insbesondere von 3 mm bis 4 mm aufweisen.

9. Fahrzeugluftreifen (1) nach dem vorhergehenden Anspruch, **dadurch gekennzeichnet, dass** ein Wert einer maximalen radialen Tiefe (25) des ersten Einschnitts (10) und/oder des zweiten Einschnitts (11) 1,2 mm kleiner ist als ein Wert einer maximalen radialen Tiefe (26) der Querrillen (8).

10. Fahrzeugluftreifen (1) nach dem vorhergehenden Anspruch, **dadurch gekennzeichnet, dass** eine mittlere radiale Tiefe des dritten Einschnitts (12) der mindestens drei Einschnitte (10, 11, 12) einem Wert entspricht, der von dem Wert der mittleren radialen Tiefe (25) des ersten Einschnitts (10) und des zweiten Einschnitts (11) bis zu dem Wert der radialen Tiefe (26) der Querrillen (8) reicht.

11. Fahrzeugluftreifen (1) nach dem vorhergehenden Anspruch, **dadurch gekennzeichnet, dass** der erste Einschnitt (10) eine Krümmung bezüglich der Längsachse (19) des mindestens einen Profilblocks (61) aufweist, wobei die Krümmung einem Kreisbogen eines Kreises mit einem Radius (24) von 250 mm bis 400 mm folgt.

## Claims

1. Pneumatic vehicle tyre (1), which can be rotated in a circumferential direction (4) and has a tread (5) with joined-together tread bars (6, 61, 62) formed by circumferential or oblique grooves (7) and transverse grooves (8) in such a manner that the transverse grooves (8) extend as far as a transitional region (91) of two tread bars (61, 62), wherein the transitional region (91) is part of a first tread bar (61) of the at least two tread bars (61, 62), and wherein each tread bar (6, 61, 62) has at least three sipes (10, 11, 12), which are straight or slightly curved when viewed from above, wherein at least a first sipe (10) of the at least three sipes (10, 11, 12) extends substantially parallel to a longitudinal axis (19) of at least one tread bar (61), wherein at least a second sipe (11) and at least a third sipe (12) of the at least three sipes (10, 11, 12) extend at an angle (14, 15) of in each case 70° to 90° to the circumferential direction (4) or to a parallel (41) of the circumferential direction (4) of the pneumatic vehicle tyre (1), **characterized in that** the first sipe (10) and the second sipe (11) form a single, joined-together angled-away sipe (17).

2. Pneumatic vehicle tyre (1) according to the preceding claim, **characterized in that** the first sipe (10) and the second sipe (11) form an angle (16) of 120° to 150° and preferably of 130° to 140° and in particular of 135°.

3. Pneumatic vehicle tyre (1) according to either of the preceding claims, **characterized in that** the first sipe (10) and the second sipe (11) have at right angles to their extent a width (18) of 0.4 mm to 2 mm and preferably of 0.5 mm.

4. Pneumatic vehicle tyre (1) according to one of the preceding claims, **characterized in that** the longitudinal axis (19) of the at least one tread bar (61) forms with the circumferential direction (4) an angle (20) of 30° to 60°, preferably of 40° to 50° and in particular of 45°.

5. Pneumatic vehicle tyre (1) according to one of the preceding claims, **characterized in that** the transitional region (91) is arranged spatially in each case in such a manner between at least two tread bars (61, 62), and when viewed from above follows the shape of a triangle, wherein a first side (21) of the triangle is formed by the third sipe (12) of the three sipes (10, 11, 12) of a first tread bar (61) of the at least two tread bars (61, 62) and a tip (22) of the triangle that is opposite this first side (21) of the triangle points in the direction (42) of the circumferential direction (4).

6. Pneumatic vehicle tyre (1) according to the preceding claim, **characterized in that** the transitional region (91) is connected in a material-bonding manner to the second tread bar (62) of the at least two tread bars (61, 62).

7. Pneumatic vehicle tyre (1) according to either of Claims 5 and 6, **characterized in that** the third sipe (12), by which the first side (21) of the triangle is formed, is wider at right angles to its extent than the first sipe (10) and the second sipe (11) of the three sipes (10, 11, 12) of the at least one first tread bar (61) and in particular has at right angles to its extent a width (27) of 0.4 mm to 2 mm and preferably of 1.5 mm to 2 mm.

8. Pneumatic vehicle tyre (1) according to one of the preceding claims, **characterized in that** the transverse grooves (8) have at right angles to their extent a width (23) of 2 mm to 10 mm and preferably of 3 mm to 7 mm and in particular of 3 mm to 4 mm.

9. Pneumatic vehicle tyre (1) according to the preceding claim, **characterized in that** a value of a maximum radial depth (25) of the first sipe (10) and/or the second sipe (11) is 1.2 mm less than a value of a maximum radial depth (26) of the transverse grooves (8).

10. Pneumatic vehicle tyre (1) according to the preceding claim, **characterized in that** the average radial depth of the third sipe (12) of the at least three sipes (10, 11, 12) corresponds to a value which ranges from the value of the average radial depth (25) of the first sipe (10) and of the second sipe (11) to the value of the radial depth (26) of the transverse grooves (8).

11. Pneumatic vehicle tyre (1) according to the preceding claim, **characterized in that** the first sipe (10) has a curvature with respect to the longitudinal axis (19) of the at least one tread bar (61), wherein the curvature follows an arc of a circle with a radius (24) of 250 mm to 400 mm.

## Revendications

1. Pneumatique de véhicule (1), qui est rotatif dans une direction circonférentielle (4), muni d'une bande de roulement (5), munie de blocs profilés (6, 61, 62) réalisés cohérents et formés par des rainures périphériques ou inclinées (7) et par des rainures transversales (8), de telle sorte que les rainures transversales (8) s'étendent jusqu'à une zone de transition (91) de deux blocs profilés (61, 62), la zone de transition (91) étant un constituant d'un premier bloc profilé (61) parmi les au moins deux blocs profilés (61, 62), et chaque bloc profilé (6, 61, 62) comprenant au moins trois entailles (10, 11, 12), droites ou légèrement courbées en vue de dessus, au moins une première entaille (10) parmi les au moins trois entailles (10, 11, 12) s'étendant essentiellement en parallèle à un axe longitudinal (19) d'au moins un bloc profilé (61), au moins une deuxième entaille (11) et au moins une troisième entaille (12) parmi les au moins trois entailles (10, 11, 12) s'étendant à un angle (14, 15) respectif de 70° à 90° par rapport à la direction circonférentielle (4) ou à une parallèle (41) de la direction circonférentielle (4) du pneumatique de véhicule (1), **caractérisé en ce que** la première entaille (10) et la deuxième entaille (11) forment une entaille cohérente coudée unique (17).

2. Pneumatique de véhicule (1) selon la revendication précédente, **caractérisé en ce que** la première entaille (10) et la deuxième entaille (11) forment un angle (16) de 120° à 150° et de préférence de 130° à 140° et notamment de 135°.

3. Pneumatique de véhicule (1) selon l'une quelconque des revendications précédentes, **caractérisé en ce que** la première entaille (10) et la deuxième entaille (11) présentent, à angle droit par rapport à leur étendue, une largeur (18) de 0,4 mm à 2 mm et de préférence de 0,5 mm.

4. Pneumatique de véhicule (1) selon l'une quelconque des revendications précédentes, **caractérisé en ce que** l'axe longitudinal (19) de l'au moins un bloc profilé (61) forme avec la direction circonférentielle (4) un angle (20) de 30° à 60°, de préférence de 40° à 50° et notamment de 45°.

5. Pneumatique de véhicule (1) selon l'une quelconque des revendications précédentes, **caractérisé en ce que** la zone de transition (91) est agencée dans l'espace respectif entre au moins deux blocs profilés (61, 62), et suit en vue de dessus la forme d'un triangle, le premier côté (21) du triangle étant formé par la troisième entaille (12) parmi les trois entailles (10, 11, 12) d'un premier bloc profilé (61) parmi les au moins deux blocs profilés (61, 62), et une pointe (22) du triangle opposée à ce premier côté (21) du triangle étant orientée dans la direction (42) de la direction circonférentielle (4).

6. Pneumatique de véhicule (1) selon la revendication précédente, **caractérisé en ce que** la zone de transition (91) est reliée par accouplement de matière avec le deuxième bloc profilé (62) parmi les au moins deux blocs profilés (61, 62).

7. Pneumatique de véhicule (1) selon l'une quelconque des revendications 5 ou 6, **caractérisé en ce que** la troisième entaille (12), par laquelle le premier côté (21) du triangle est formé, est plus large à angle droit par rapport à son étendue que la première entaille (10) et la deuxième entaille (11) parmi les trois entailles (10, 11, 12) de l'au moins un premier bloc profilé (61) et présente notamment à angle droit par rapport à son étendue une largeur (27) de 0,4 mm à 2 mm et de préférence de 1,5 mm à 2 mm.

8. Pneumatique de véhicule (1) selon l'une quelconque des revendications précédentes, **caractérisé en ce que** les rainures transversales (8) présentent à angle droit par rapport à leur étendue une largeur (23) de 2 mm à 10 mm et de préférence de 3 mm à 7 mm et notamment de 3 mm à 4 mm.

9. Pneumatique de véhicule (1) selon la revendication précédente, **caractérisé en ce qu'**une valeur d'une profondeur radiale maximale (25) de la première entaille (10) et/ou de la deuxième entaille (11) est 1,2 mm plus petite qu'une valeur d'une profondeur radiale maximale (26) des rainures transversales (8).

10. Pneumatique de véhicule (1) selon la revendication précédente, **caractérisé en ce qu'**une profondeur radiale moyenne de la troisième entaille (12) parmi les au moins trois entailles (10, 11, 12) correspond à une valeur qui va de la valeur de profondeur radiale moyenne (25) de la première entaille (10) et de la deuxième entaille (11) jusqu'à la valeur de la profondeur radiale (26) des rainures transversales (8).

11. Pneumatique de véhicule (1) selon la revendication précédente, **caractérisé en ce que** la première entaille (10) présente une cambrure, par rapport à l'axe longitudinal (19) de l'au moins un bloc profilé (61), la cambrure suivant un arc de cercle d'un cercle ayant un rayon (24) de 250 mm à 400 mm.
